# EUROPEAN PATENT APPLICATION

(11) **EP 4 224 319 A1**
(43) Date of publication of application: **09.08.2023**
(21) Application number: 20956220.6
(22) Date of filing: 30.09.2020
(51) Int. Cl.: G06F 9/50

(54) **VDI RESOURCE ALLOCATION DETERMINATION DEVICE, VDI RESOURCE ALLOCATION DETERMINATION METHOD, AND VDI RESOURCE ALLOCATION DETERMINATION PROGRAM**

(71) Applicant: Nippon Telegraph And Telephone Corporation, Chiyoda-ku Tokyo 100-8116 (JP)
(72) Inventor: WU, Chao, Musashino-shi, Tokyo 180-8585 (JP); TAYAMA, Kenichi, Musashino-shi, Tokyo 180-8585 (JP); HORIUCHI, Shingo, Musashino-shi, Tokyo 180-8585 (JP); MURASE, Kenji, Musashino-shi, Tokyo 180-8585 (JP)
(74) Representative: Gramm, Lins & Partner Patent- und Rechtsanwälte PartGmbB
(86) International application number: PCT/JP2020/037079
(87) International publication number: WO 2022/070292

(57) **Abstract**

A virtual desktop (VDI) resource allocation decision apparatus that decides resource allocation of a VDI apparatus according to an embodiment includes an input unit that receives a performance requirement defining performance to be satisfied by the VDI apparatus and a specified time zone indicating a time zone in which the performance requirement is satisfied, a resource allocation collection and storage unit that stores a current resource allocation including a number of virtual machines included in a host of the VDI apparatus and a virtual calculation resource allocated to a virtual machine, a workload collection and storage unit that stores a workload of the VDI apparatus, and a calculation function unit that applies the specified time zone and the workload to a workload prediction model to calculate a workload in the specified time zone, applies the workload in the specified time zone and the current resource allocation to a performance model to calculate first performance of the VDI apparatus, and determines whether or not the first performance meets the performance requirement.

## Description

### Technical Field

The present invention relates to a virtual desktop (VDI) resource allocation decision apparatus, a VDI resource allocation decision method, and a VDI resource allocation decision program.

### Background Art

In recent years, virtual desktop infrastructure (VDI) apparatus is becoming popular due to cost reduction, work style revolution, and the like. The VDI apparatus is for virtualizing a desktop environment of a user terminal in which, for example, processing of data or the like to be performed by the user terminal is performed on the VDI apparatus, and processing performed by the user terminal is aggregated on the VDI apparatus.

In order to improve the Quality of Experience (QoE) for the user using the VDI apparatus, various performance requirements need to be quantitatively satisfied (see, for example, Non Patent Literature 1).

### Citation List

### Non Patent Literature

Non Patent Literature 1: "VDC-Analyst: Design and verification of virtual desktop cloud resource allocations", P. Calyam et al. Computer Networks 68 (2014) 110-122

### Summary of Invention

### Technical Problem

However, in Non Patent Literature 1, a resource allocation decision method for satisfying performance requirements has not been studied.

An object of the present invention is to make it possible to decide resource allocation for satisfying performance requirements.

### Solution to Problem

In order to solve the above problems, a virtual desktop (VDI) resource allocation decision apparatus that decides resource allocation of a VDI apparatus of the present invention includes an input unit that receives a performance requirement defining performance to be satisfied by the VDI apparatus and a specified time zone indicating a time zone in which the performance requirement is satisfied, a resource allocation collection and storage unit that stores a current resource allocation including a number of virtual machines included in a host of the VDI apparatus and a virtual calculation resource allocated to a virtual machine, a workload collection and storage unit that stores a workload of the VDI apparatus, and a calculation function unit that applies the specified time zone and the workload to a workload prediction model to calculate a workload in the specified time zone, applies the workload and the current resource allocation in the specified time zone to a performance model to calculate first performance of the VDI apparatus, and determines whether or not the first performance meets the performance requirement.

### Advantageous Effects of Invention

According to an aspect of the present invention, resource allocation meeting performance requirements can be decided.

### Brief Description of Drawings

Fig. 1 is a configuration diagram illustrating an entire virtual desktop (VDI) resource allocation system.
Fig. 2 is a block diagram illustrating an example of a hardware configuration of a VDI apparatus.
Fig. 3 is a block diagram illustrating an example of a hardware configuration of a VDI resource allocation decision apparatus in an embodiment.
Fig. 4 is a block diagram illustrating an example of a hardware configuration of a user terminal.
Fig. 5 illustrates a functional configuration diagram of the VDI resource allocation decision apparatus.
Fig. 6 is a diagram illustrating an example of a workload collected from a VDI apparatus by a workload collection and storage unit.
Fig. 7 is a diagram illustrating an example of performance collected from the VDI apparatus by a performance collection and storage unit.
Fig. 8 is a diagram illustrating an example of workload prediction model generation by a calculation function unit.
Fig. 9 is a diagram illustrating an example of workload calculation in a specified time zone using a workload prediction model by the calculation function unit.
Fig. 10 is a diagram illustrating an example of performance model generation by the calculation function unit.
Fig. 11 is a diagram illustrating an example of workload calculation in the specified time zone using a performance model by the calculation function unit.
Fig. 12 is a flowchart illustrating an example of a VDI resource allocation decision operation of the VDI resource allocation decision apparatus in the embodiment.
Fig. 13 is a diagram illustrating an example of an input screen to be presented to a VDI operator.
Fig. 14 is a diagram illustrating an example of current resource allocation of a VDI system.
Fig. 15 is a diagram illustrating an example of a workload in the specified time zone.
Fig. 16 is a diagram illustrating an example of a presentation screen that presents performance requirements superimposed on the performance calculated in step S104 in Fig. 12.
Fig. 17 is a diagram illustrating an example of settable resource allocation.
Fig. 18 is a diagram illustrating an example of a presentation screen that presents performance requirements superimposed on the performance calculated in step S108 in Fig. 12.

### Description of Embodiments

Hereinafter, embodiments according to the present invention will be described with reference to the drawings.

### [Configuration]

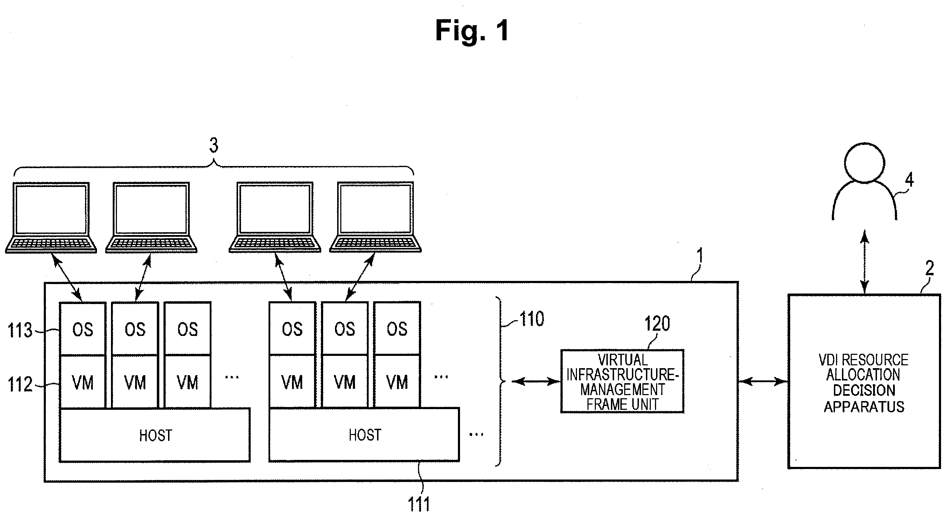

Fig. 1 is a configuration diagram illustrating an entire virtual desktop (VDI) resource allocation system.

The VDI resource allocation system in Fig. 1 includes a VDI apparatus 1, a VDI resource allocation decision apparatus 2 according to an embodiment of the present invention, and user terminals 3. Fig. 1 also illustrates a VDI operator 4 for managing and operating the VDI resource allocation decision apparatus 2.

The VDI apparatus 1 includes a VDI system 110 and a virtual infrastructure-management frame unit 120. The VDI system 110 includes a host 111, a virtual machine 112 (indicated as VM in Fig. 1), and an operating system 113 (In Fig. 1, OS and display are illustrated). The VDI apparatus 1 is connected to the VDI resource allocation decision apparatus 2 in a wireless or wired manner via a network using a communication protocol such as http.

The host 111 includes one or a plurality of physical servers, and performs processing requested from the user terminals 3. In the host 111, virtualization software is installed, and the virtual machine 112 and the operating system 113 used by each of the user terminals 3 are constructed. Further, the virtual machine 112 is connected to each of the user terminals 3 wirelessly or by wire via an IP network using a screen transfer protocol such as remote desktop or PCoIP. The virtual infrastructure-management frame unit 120 is used to manage the VDI system 110. The virtual infrastructure-management frame unit 120 manages resource allocation of the VDI system 110, for example, the number of virtual machines 112 allocated to one host 111 and the number of virtual CPUs (vCPUs), a memory amount, a disk capacity, and the like, which are virtual calculation resources allocated to each virtual machine 112.

The VDI resource allocation decision apparatus 2 collects a workload, performance, and current resource allocation from the VDI apparatus 1. Furthermore, the VDI resource allocation decision apparatus 2 holds a workload prediction model and a performance model generated from the collected workload, performance, and current resource allocation. Note that the workload prediction model is a model that outputs a workload in a specified time zone when the specified time zone is input. Furthermore, the performance model is a model that outputs performance in the specified time zone when the workload in the specified time zone output from the workload prediction model and the resource allocation are input. Furthermore, the VDI resource allocation decision apparatus 2 receives an input of a performance requirement from the VDI operator 4. Then, the VDI resource allocation decision apparatus 2 calculates the resource allocation satisfying this performance requirement, and presents a calculated resource allocation to the VDI operator 4, or directly sends an instruction to the virtual infrastructure-management frame unit 120 so that the resource allocation of the VDI apparatus 1 becomes the calculated resource allocation. Note that a method of calculating the resource allocation satisfying the performance requirement will be described later.

The user terminal 3 is a terminal used by a user, and does not need to include a processing capability and a storage in the user terminal 3 like a thin client. That is, the user terminal 3 only needs to be capable of displaying information obtained from the virtual machine 112 to the user and sending an input from the user to the virtual machine 112.

The VDI operator 4 may be an operator who operates the entire VDI resource allocation system, and inputs performance requirements desired to be satisfied for the user terminal 3 to the VDI resource allocation decision apparatus 2. Furthermore, the VDI operator 4 may instruct resource allocation of the VDI apparatus 1 according to the resource allocation presented by the VDI resource allocation decision apparatus 2.

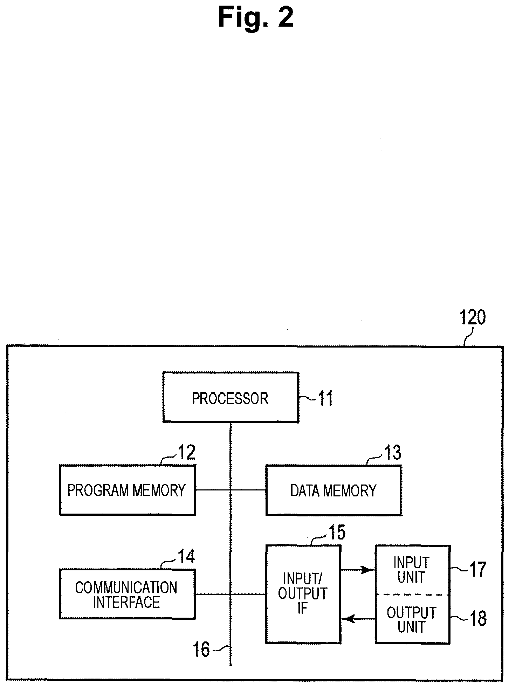

Fig. 2 is a block diagram illustrating an example of a hardware configuration of the virtual infrastructure-management frame unit 120 of the VDI apparatus 1.

As illustrated in Fig. 2, the virtual infrastructure-management frame unit 120 includes, for example, a server computer and has a hardware processor 11 such as a central processing unit (CPU). As the hardware processor 11, various integrated circuits such as an application specific integrated circuit (ASIC), a field programmable gate array (FPGA), or a graphics processing unit (GPU) may be used instead of or together with the CPU. Then, in the VDI apparatus 1, a program memory 12, a data memory 13, a communication interface 14, and an input/output interface (referred to as an input/output IF in Fig. 2) 15 are connected to the hardware processor 11 via a bus 16.

The communication interface 14 may include, for example, one or more wired or wireless communication modules. The communication interface 14 performs communication between the VDI resource allocation decision apparatus 2 and (one or more physical servers constituting) the respective hosts 111 in the VDI system 110, and enables information exchange with the VDI resource allocation decision apparatus 2 and each of the hosts 111.

An input unit 17 and a display unit 18 are connected to the input/output interface 15. As the input unit 17 and the display unit 18, for example, what is called a tablet-type input/display device in which an input detection sheet employing an electrostatic method or a pressure method is arranged on a display screen of a display device using liquid crystal or organic electro luminescence (EL) is used. Note that the input unit 17 and the display unit 18 may be configured by independent devices. The input/output interface 15 inputs operation information input by the input unit 17 to the processor 11, and causes the display unit 18 to display display information generated by the processor 11.

Note that the input unit 17 and the display unit 18 are not required to be connected to the input/output interface 15. The input unit 17 and the display unit 18 can exchange information with the processor 11 by including a communication unit for connecting to the communication interface 24 directly or via a network.

The program memory 12 is a non-volatile memory that can be written and read as needed, such as a hard disk drive (HDD) or a solid state drive (SSD), and a non-volatile memory such as a ROM are used in combination as a non-transitory tangible computer readable storage medium. The program memory 12 stores programs necessary for the processor 11 to execute various control processes according to this embodiment.

The data memory 13 is, for example, a combination of the above-described nonvolatile memory and a volatile memory such as a random access memory (RAM) as a tangible computer readable storage medium. The data memory 13 is used to store various data acquired and created in the process of performing various processes.

Note that one or more physical servers constituting each host 111 can also employ a configuration similar to that of the server computer constituting the virtual infrastructure-management frame unit 120. In addition, the server computer constituting the virtual infrastructure-management frame unit 120 and the server computer constituting any physical server of any one of the hosts 111 may share one server computer.

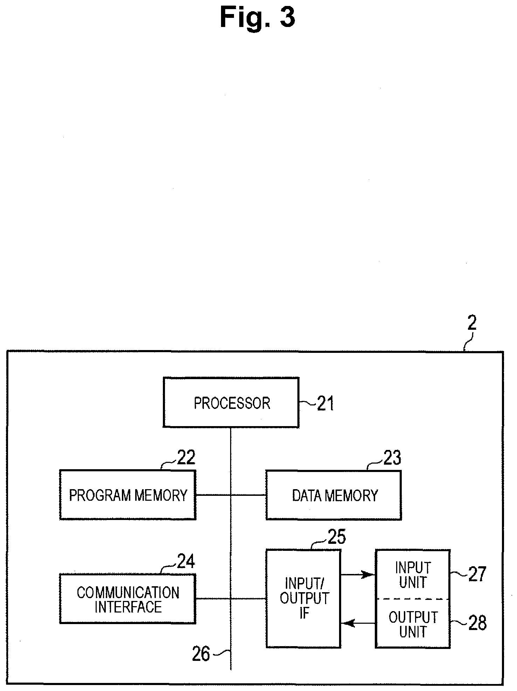

Fig. 3 is a block diagram illustrating an example of a hardware configuration of the VDI resource allocation decision apparatus 2.

As illustrated in Fig. 3, the VDI resource allocation decision apparatus 2 includes, for example, a server computer or a personal computer, and includes a hardware processor 21 such as a CPU. Then, in the VDI resource allocation decision apparatus 2, a program memory 22, a data memory 23, a communication interface 24, and an input/output interface (referred to as an input/output IF in Fig. 3) 25 are connected to the hardware processor 21 via a bus 26.

The communication interface 24 may include, for example, one or more wired or wireless communication modules. The communication interface 24 communicates with the VDI apparatus 1 to enable information exchange with the VDI apparatus 1.

An input unit 27 and a display unit 28 are connected to the input/output interface 25. For example, a tablet-type input/display device is used as the input unit 27 and the display unit 28. Note that the input unit 27 and the display unit 28 may be configured by independent devices. The input/output interface 25 inputs operation information input by the input unit 27 to the processor 21, and causes the display unit 28 to display display information generated by the processor 21.

Note that the input unit 27 and the display unit 28 are not required to be connected to the input/output interface 25. The input unit 27 and the display unit 28 can exchange information with the processor 21 by including a communication unit for connecting to the communication interface 24 directly or via a network. In this case, the input unit 27 and the display unit 28 may function as the input unit 17 and the display unit 18 of the VDI apparatus 1. That is, the input unit 17 and the display unit 18 of the VDI apparatus 1 and the input unit 27 and the display unit 28 of the VDI resource allocation decision apparatus 2 may be used as one input unit and one display unit.

The program memory 22 is a non-volatile memory that can be written and read as needed, such as a hard disk drive (HDD) or a solid state drive (SSD), and a non-volatile memory such as a ROM are used in combination as a non-transitory tangible computer readable storage medium. The program memory 22 stores programs necessary for the processor 21 to execute various control processes according to this embodiment.

The data memory 23 is a tangible computer readable storage medium in which, for example, the nonvolatile memory and the volatile memory such as the RAM are used in combination. The data memory 23 is used to store various data acquired and created in the process of performing various processes.

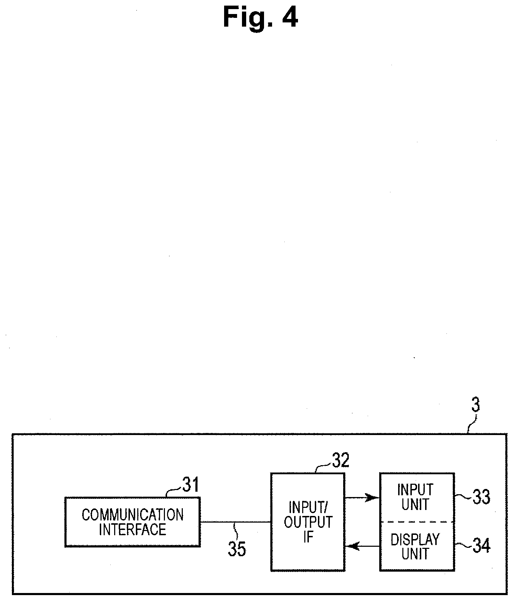

Fig. 4 is a block diagram illustrating an example of a hardware configuration of the user terminal 3.

As illustrated in Fig. 4, in the user terminal 3, for example, a communication interface 31 and an input/output interface (referred to as an input/output IF in Fig. 4) 32 are connected via a bus 35. That is, the user terminal 3 may be a thin client, and may not include a processor and various memories as illustrated in Figs. 2 and 3. Note that, although not illustrated in Fig. 4, the user terminal 3 may include a volatile memory such as a RAM in order to temporarily store data in the process of performing various types of processing.

The communication interface 31 may include, for example, one or more wired or wireless communication modules. The communication interface 31 communicates with the VDI apparatus 1, and enables information exchange of information such as processing performed by the VDI apparatus 1 or input from the user with the VDI apparatus 1.

An input unit 33 and a display unit 34 are connected to the input/output interface 32. For example, a tablet-type input/display device is used as the input unit 33 and the display unit 34. Note that the input unit 33 and the display unit 34 may be configured by independent devices. The input/output interface 32 inputs operation information input by the input unit 33 to the VDI apparatus 1 via the communication interface 31, and displays display information generated by the VDI apparatus 1 on the display unit 34 via the communication interface 31.

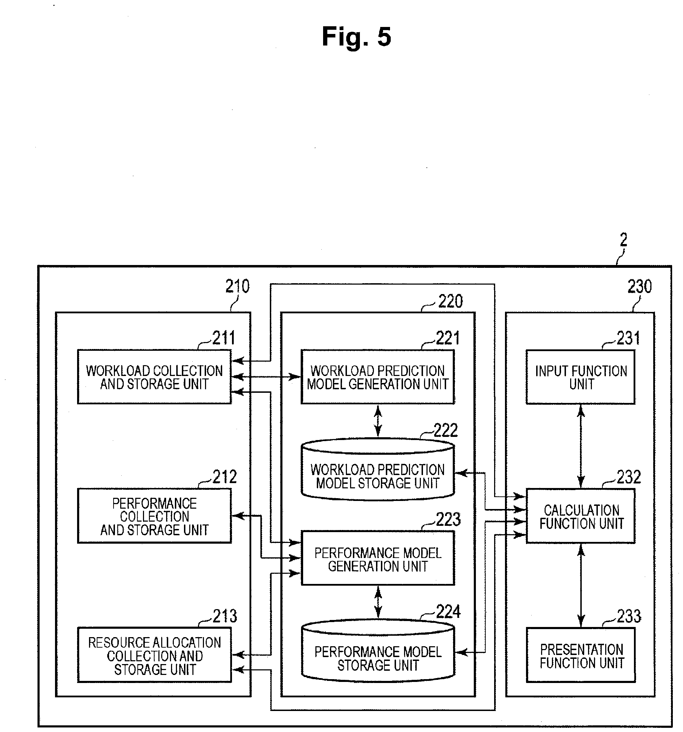

Fig. 5 illustrates a functional configuration diagram of the VDI resource allocation decision apparatus 2 according to this embodiment.

The VDI resource allocation decision apparatus 2 includes a collection function unit group 210, a model generation function unit group 220, and a calculation function unit group 230.

The collection function unit group 210 includes a workload collection and storage unit 211, a performance collection and storage unit 212, and a resource allocation collection and storage unit 213.

The workload collection and storage unit 211 collects and stores information about an application workload and a host workload generated in the VDI system 110. The application workload is a workload generated on the virtual machine 112 and the operating system 113, and is, for example, a document viewing and editing workload, a remote conference workload, a program execution workload, an image editing workload, and the like. The host workload is a workload generated on the host 111, and is, for example, a CPU/GPU workload, a memory workload, a network throughput workload, a virtual machine activation number and shutdown number workload, and the like of the host 111.

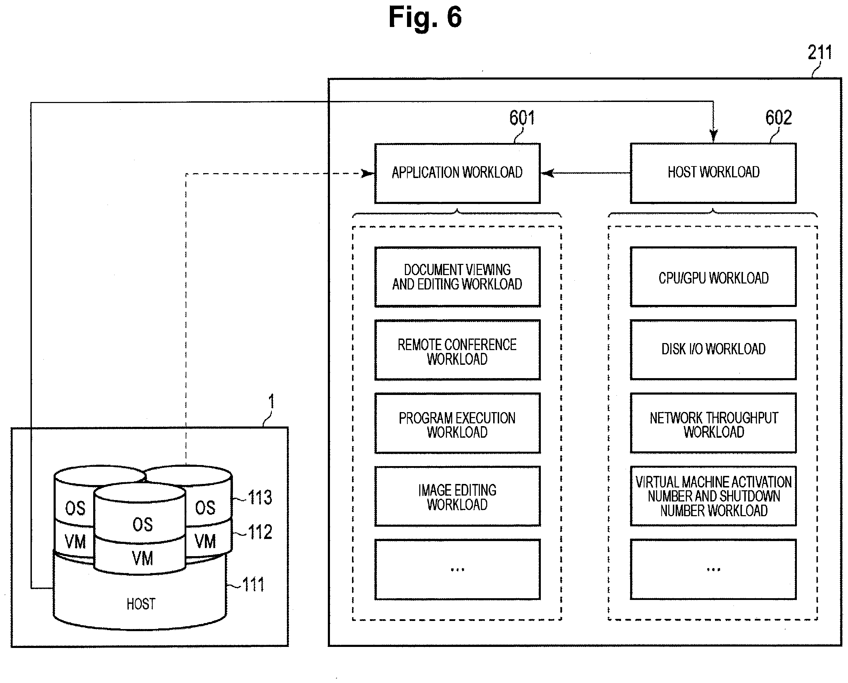

Fig. 6 is a diagram illustrating an example of the workload collected from the VDI apparatus 1 by the workload collection and storage unit 211. The VDI apparatus 1 collects application workloads using respective application workload collection tools installed on the VDI apparatus 1. Then, the workload collection and storage unit 211 receives and stores the collected application workload. The VDI apparatus 1 collects host workloads using a host workload collection tool installed on the VDI apparatus 1. Then, the workload collection and storage unit 211 receives and stores the collected host workload.

The application workload can directly represent the workload of the virtual machine 112, and there are various types of application workloads. However, due to the low number of dedicated tools for collecting application workloads or user privacy issues, the application workload is difficult to collect or is only collectable in a limited manner by the workload collection and storage unit 211. Further, the workloads are also essential data for generating the performance models described below. Therefore, even in a case where the application workload is difficult to collect or is only collectable in a limited manner, it is necessary to collect workload information that can represent a processing weight of the VDI instead of the application workload. Therefore, the workload collection and storage unit 211 collects and stores the host workload that can indirectly express the VDI workload.

In a case where the application workload is difficult to collect or collectable in a limited manner, in order to substitute for the application workload and cause the performance model to learn by using the workload information, the workload collection and storage unit 211 collects the host workload that can substitute for the application workload, and uses the host workload as a workload part of the learning data of the performance model. For example, in order to substitute for the document viewing and editing workload that is the application workload, the workload collection and storage unit 211 collects the CPU/GPU workload, the memory workload, and a disk workload that are host workloads, and uses the workloads as a part of the learning data of the performance model. Furthermore, in order to substitute for the remote conference workload that is an application workload, the workload collection and storage unit 211 collects the CPU/GPU workload and the network throughput workload that are host workloads, and uses the workload as a part of the learning data of the performance model. As described above, even in a case where the application workload is difficult to collect or collectable in a limited manner, the VDI resource allocation decision apparatus 2 can provide the workload information to the performance model and generate the performance model by collecting the collected host workload.

Further, the workload collection and storage unit 211 collects both the application workload and the host workload even when the application workload can be collected. This allows for more accurate and complete representation of the workload of the entire VDI system 110, leading to improved accuracy of the performance model.

The performance collection and storage unit 212 collects and stores application performance and host performance. The application performance is performance directly felt by the user, and is, for example, input response time, program start delay, image quality, virtual machine start/shutdown delay time, and the like of the virtual machine 112, and the operating system 113. The host performance is performance that can be observed and evaluated by the host 111, and is, for example, CPU latency, memory overload, input response time, network delay time, or the like of the host 111. In addition, host performance can indirectly evaluate application performance.

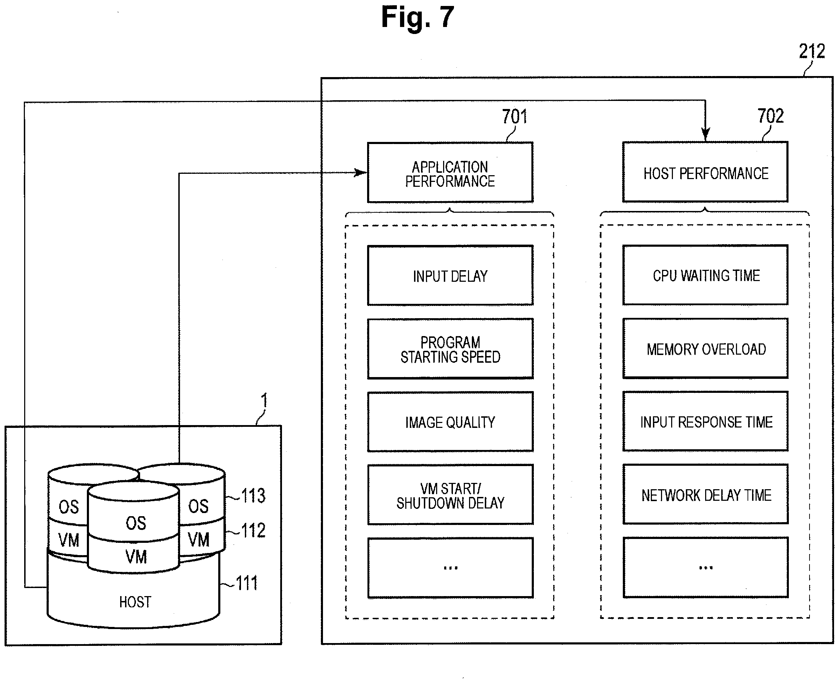

Fig. 7 is a diagram illustrating an example of performance collected from the VDI apparatus 1 by the performance collection and storage unit 212. The VDI apparatus 1 collects application performance using each application performance collection tool installed on the VDI apparatus 1. The performance collection and storage unit 212 then receives and stores the collected application performance. The VDI apparatus 1 collects host performance using the host performance collection tool installed on the VDI apparatus 1. The performance collection and storage unit 212 then receives and stores the collected host performance.

The resource allocation collection and storage unit 213 collects and stores a cluster level and the resource allocation from the virtual infrastructure-management frame unit 120. Here, the cluster level represents, for example, the number of nodes in the cluster and the total amount of calculation resources, and the cluster is a predetermined number of hosts 111 combined. Note that the calculation resource represents, for example, the amount of vCPU, memory, and disk in the cluster. The resource allocation represents the number of hosts in the VM 112, the number of VMs 112 arranged in the host, and virtual calculation resources arranged in each VM 112. Here, the virtual calculation resource represents the amount of vCPU, memory, and disk allocated to one VM 112. Further, the resource allocation collection and storage unit 213 calculates and stores the resource allocation settable by the VDI system 110 from the collected cluster level and resource allocation.

The model generation function unit group 220 includes a workload prediction model generation unit 221, a workload prediction model storage unit 222, a performance model generation unit 223, and a performance model storage unit 224.

The workload prediction model generation unit 221 generates the workload prediction model on the basis of the application workload and the host workload stored in the workload collection and storage unit 211, that is, the past workload data. The workload prediction model is a model that outputs, when a future specified time zone is specified, the application workload in the specified time zone and the host workload in the specified time zone. The specified time zone indicates a time zone in which the performance requirements desired to be satisfied by the VDI operator 4 for the user terminal 3 are to be satisfied. Here, the workload prediction model generation unit 221 can generate the workload prediction model using an existing method such as long short time memory (LSTM). Therefore, a detailed method of generating the workload prediction model is omitted here.

The workload prediction model storage unit 222 stores the workload prediction model generated by the workload prediction model generation unit 221.

The performance model generation unit 223 generates a performance model on the basis of the current resource allocation including the application workload and the host workload stored in the workload collection and storage unit 211, that is, past workload data, the application performance and the host performance stored in the performance collection and storage unit 212, that is, past performance, and the cluster level and the resource allocation stored in the resource allocation collection and storage unit 213. The performance model is a model that outputs application performance in the specified time zone and host performance in the specified time zone when the application workload, the host workload, and the resource allocation in the specified time zone are input. Note that the performance model is a model that calculates a qualitative relationship between a workload as an input and performance as an output. Here, the performance model generation unit 223 can use an existing method such as neural network regression in order to generate the performance model. Therefore, a detailed method of generating the performance model is omitted here.

The performance model storage unit 224 stores the performance model generated by the performance model generation unit 223.

The calculation function unit group 230 includes an input function unit 231, a calculation function unit 232, and a presentation function unit 233.

The input function unit 231 receives requirement information including an application performance requirement, a host performance requirement, and an input of the specified time zone in which these requirements are to be satisfied, which are input by the VDI operator 4. Upon receiving the requirement information, the input function unit 231 transmits the requirement information to the calculation function unit 232.

The calculation function unit 232 calculates the workload in the specified time zone using the workload prediction model. Furthermore, the calculation function unit 232 calculates the performance in the specified time zone by using the performance model in the current resource setting and other settable resource settings with the workload in the specified time zone.

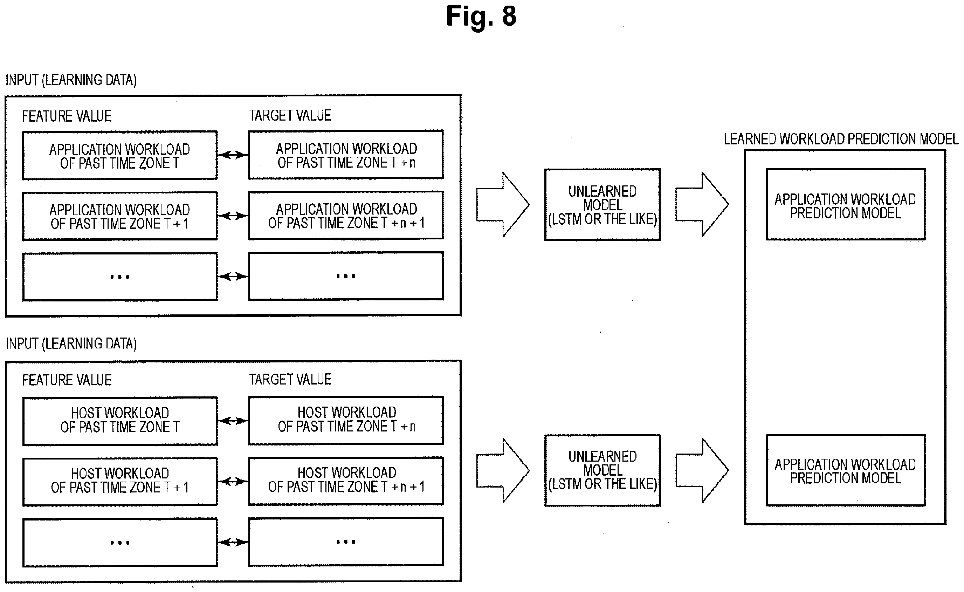

Fig. 8 is a diagram illustrating an example of workload prediction model generation by the calculation function unit 232. As illustrated in Fig. 8, the learning data includes a plurality of records, and each record includes a feature value that is a workload in a certain past time zone T and a target value that is a workload in a past time zone T + n after the certain past time zone T by n. Here, n represents an arbitrary time. By inputting the learning data to the unlearned model such as the LSTM and causing the unlearned model to learn, a model capable of predicting the workload in a future time zone from the workload in the past time zone is generated. That is, when the future time zone is specified, the generated model can predict the workload in the future specified time zone.

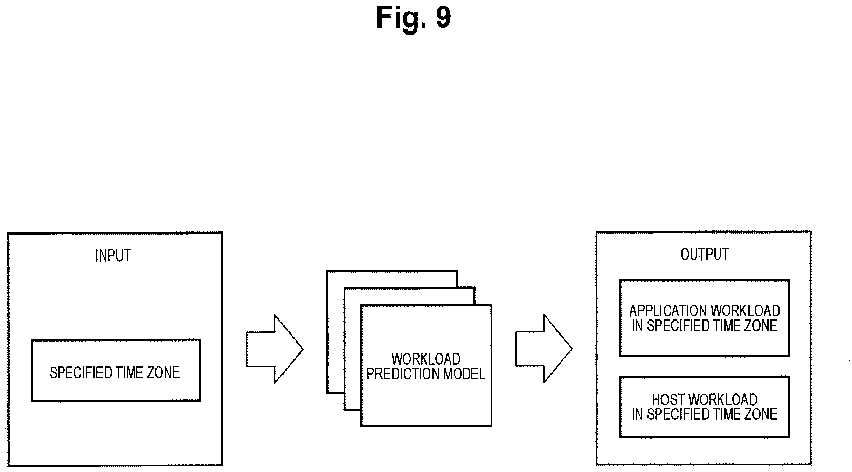

Fig. 9 is a diagram illustrating an example of workload calculation in the specified time zone using a workload prediction model by the calculation function unit 232. As illustrated in Fig. 9, when the specified time zone is input as the requirement information, the workload prediction model outputs the application workload in the specified time zone and the host workload in the specified time zone.

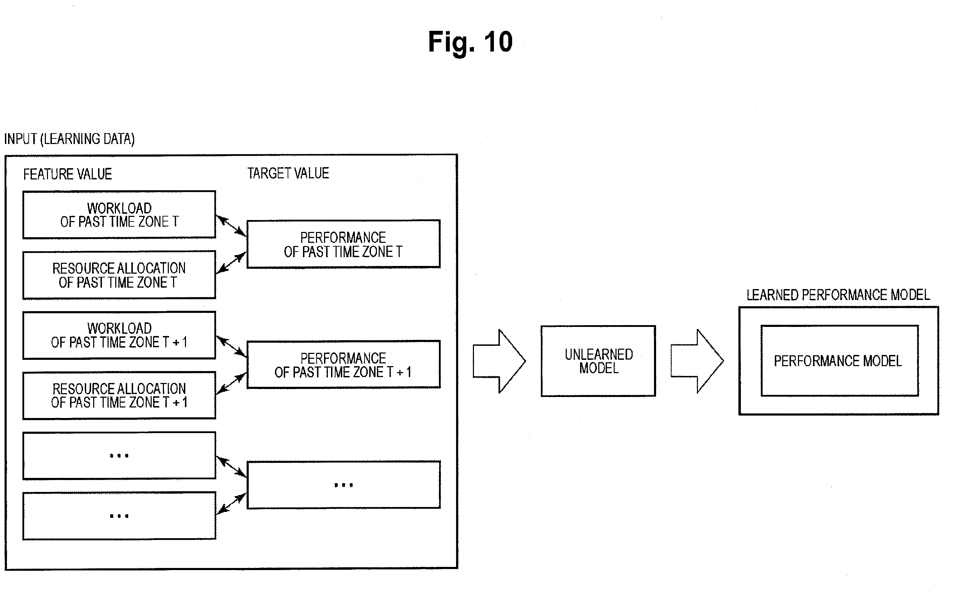

Fig. 10 is a diagram illustrating an example of performance model generation by the calculation function unit 232. As illustrated in Fig. 10, the learning data includes a plurality of records, and each record includes feature values that are the workload and the resource allocation in the certain past time zone T and a target value that is the performance in the certain past time zone T. By inputting learning data to an unlearned model of a neural network regression or the like and causing the unlearned model to learn, a model capable of calculating performance from the workload and the resource allocation in the certain time zone T is generated. That is, when the workload and the resource allocation are specified, the generated model can predict performance with the workload and the resource allocation.

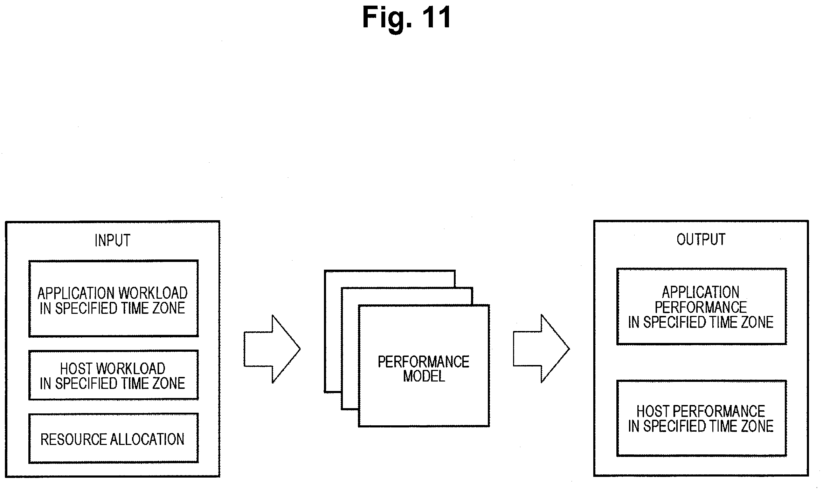

Fig. 11 is a diagram illustrating an example of workload calculation in a specified time zone using a performance model by the calculation function unit 232. When the application workload in the specified time zone and the host workload in the specified time zone, which are output from the workload prediction model, and the current resource allocation stored in the resource allocation collection and storage unit 213 are input, the performance model outputs the application performance in the specified time zone and the host performance in the specified time zone.

Furthermore, the calculation function unit 232 determines whether or not the performance output from the performance model satisfies the performance requirement input by the VDI operator 4. When the performance requirement is not satisfied, the calculation function unit 232 calculates the performance again using the settable resource allocation stored in the resource allocation collection and storage unit 213, and finds a resource allocation that satisfies the performance requirement. Then, the calculation function unit 232 transmits information regarding the found resource allocation to the presentation function unit 233.

The presentation function unit 233 presents the received information regarding the resource allocation to the VDI operator 4.

### [Operation]

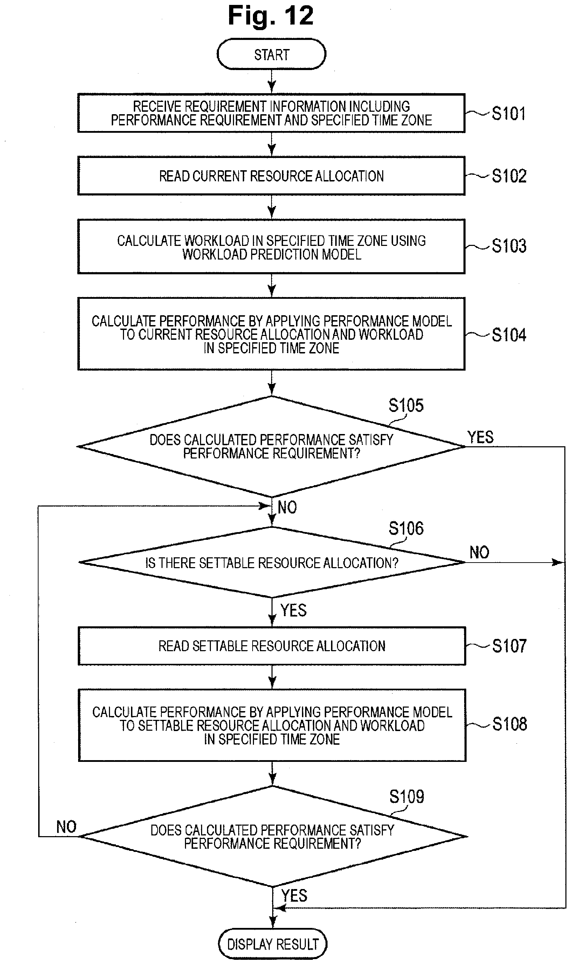

Fig. 12 is a flowchart illustrating an example of the VDI resource allocation decision operation of the VDI resource allocation decision apparatus 2 in the present embodiment. The processor 21 of the VDI resource allocation decision apparatus 2 reads and executes the VDI resource allocation decision program stored in the program memory 22, thereby implementing the operation of this flowchart. This flowchart starts when a request instruction by the VDI operator 4 that it is desired to input the performance requirements of the VDI apparatus 1.

The input function unit 231 in the VDI resource allocation decision apparatus 2 receives the requirement information including the performance requirement and the specified time zone in which the performance requirement is necessary from the VDI operator 4 via the input unit 27 (step S101). That is, upon receiving the request instruction from the VDI operator 4, the input function unit 231 causes the display unit 28 to display information for inputting the performance requirements including the application performance requirement and the host performance requirement and the future specified time zone in which these requirements are to be satisfied, and prompts the VDI operator 4 to input. The input function unit 231 receives, from the input unit 27, inputs regarding the application performance requirement, the host performance requirement, and the future specified time zone in which these requirements are necessary from the VDI operator 4. When the requirement information including the performance requirements and the specified time zone in which the performance requirements are necessary is input, the input function unit 231 transmits the requirement information to the calculation function unit 232.

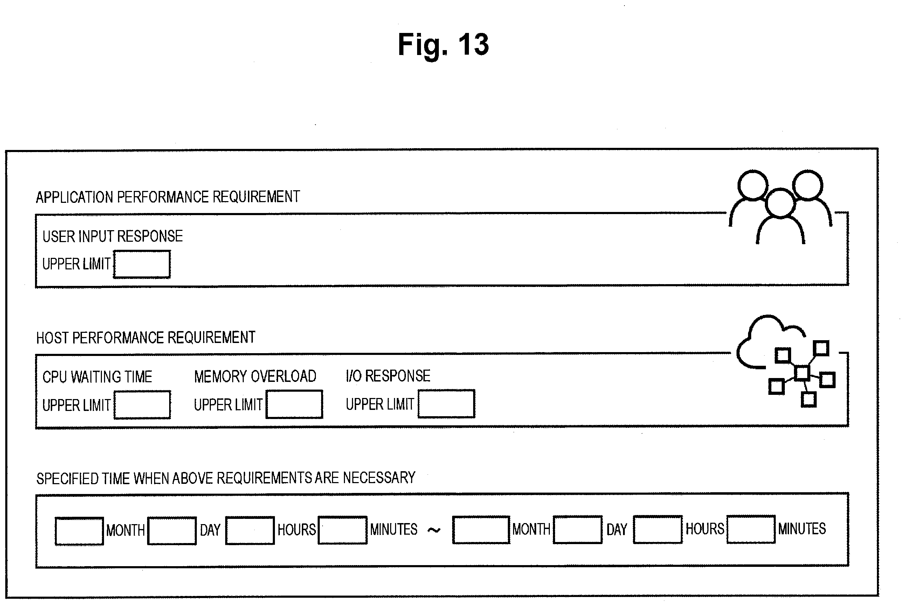

Fig. 13 is a diagram illustrating an example of an input screen to be presented to the VDI operator 4. Fig. 13 illustrates an example in which the VDI operator 4 inputs a user input response as the application performance requirement, upper limits of the CPU waiting time, the memory overload, and the I/O response time as the host performance requirement, and the future specified time zone. The VDI resource allocation decision apparatus 2 prompts the VDI operator 4 to input a number in a portion surrounded by a square. The VDI operator 4 inputs the performance requirements and the specified time zone in which the requirements are necessary. It should be noted that the requirements disclosed in Fig. 13 are merely examples, and the application performance requirement and the host performance requirement are not limited to those illustrated in Fig. 13. In addition, the application performance requirement may be rephrased as a user experience requirement.

Upon receiving the requirement information from the input function unit 231, the calculation function unit 232 reads information regarding the current resource allocation of the VDI system 110 from the resource allocation collection and storage unit 213 (step S102).

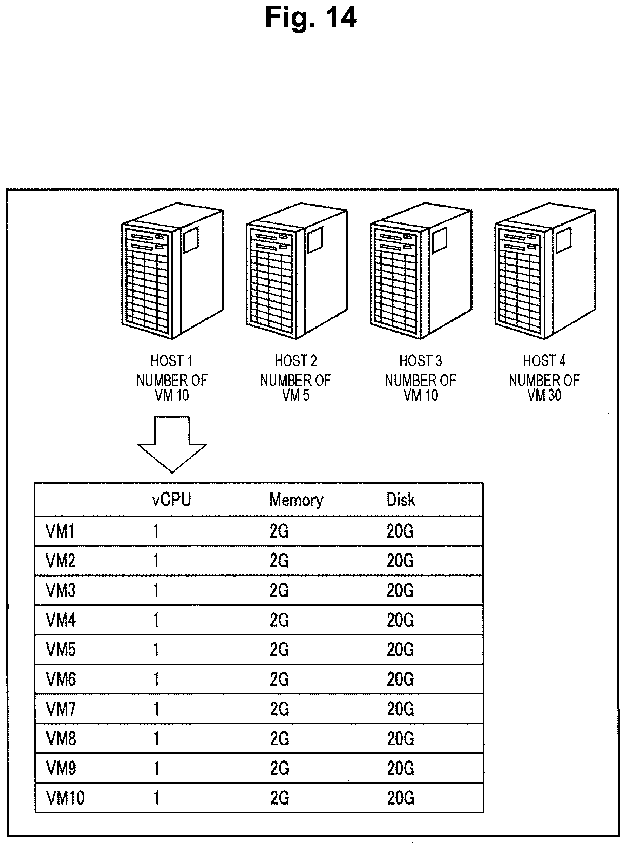

Fig. 14 is a diagram illustrating an example of current resource allocation of the VDI system 110. As illustrated in Fig. 14, the calculation function unit 232 reads information regarding the current resource allocation, that is, the number of hosts in the VDI system 110, the number of VMs in each host, and the virtual calculation resources allocated to each VM, that is, the number of vCPUs, the memory amount, and the disk capacity.

The calculation function unit 232 calculates the workload in the specified time zone using the workload prediction model stored in the workload prediction model storage unit 222 (step S103).

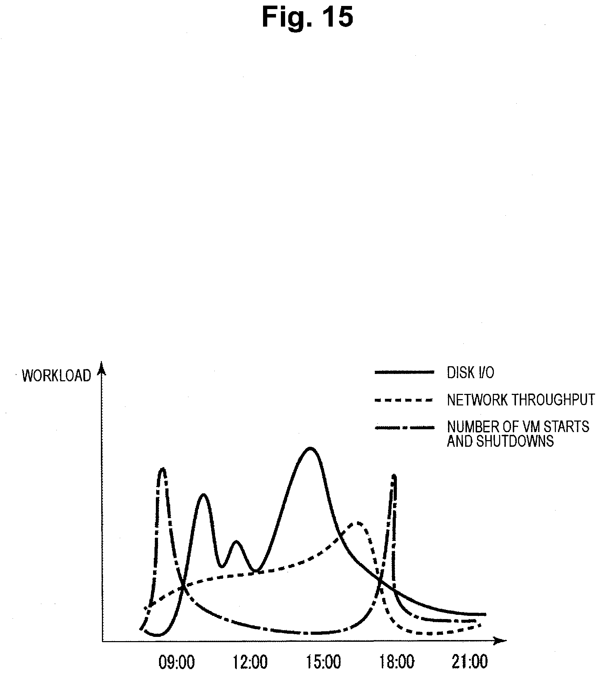

Fig. 15 is a diagram illustrating an example of a workload in a specified time zone. In the example of Fig. 15, a disk I/O workload, a network throughput workload, a VM activation number, and a shutdown number workload, which are examples of predicted workloads in the specified time zone, are illustrated in order to calculate the resource allocation corresponding to the performance requirements in the specified time zone illustrated in Fig. 13. Note that the workload illustrated in Fig. 15 is merely an example, and it is a matter of course that the calculation function unit 232 can calculate another workload in order to calculate the necessary resource allocation.

The calculation function unit 232 calculates the performance in a case of the current resource allocation in the specified time zone by applying the performance model stored in the performance model storage unit 224 to the workload in the specified time zone calculated in step S103 and the current resource allocation (step S104). That is, the calculation function unit 232 inputs the calculated application workload in the specified time zone, the host workload in the specified time zone, and the current resource allocation stored in the resource allocation collection and storage unit 213 to the performance model. The performance model outputs the application performance and the host performance in the specified time zone. For example, when the workload illustrated in Fig. 15 and the current resource allocation illustrated in Fig. 14 are input to the performance model, the performance model outputs the user response time as the application performance in the specified time zone, and outputs the CPU waiting time, the memory overload, and the disk I/O response time as the host performance in the specified time zone.

The calculation function unit 232 determines whether the calculated performance satisfies the performance requirements input by the VDI operator 4 (step S105). When the application performance and the host performance calculated in step S104 satisfy all the performance requirements, the calculation function unit 232 transmits, to the presentation function unit 233, information indicating that the performance requirements input by the VDI operator 4 are satisfied with the current resource allocation. The presentation function unit 233 presents information indicating that the performance requirements specified are satisfied with the current resource allocation to the VDI operator 4. In a case where even one of the application performance and the host performance calculated in step S104 does not satisfy the performance requirements, the processing proceeds to step S106.

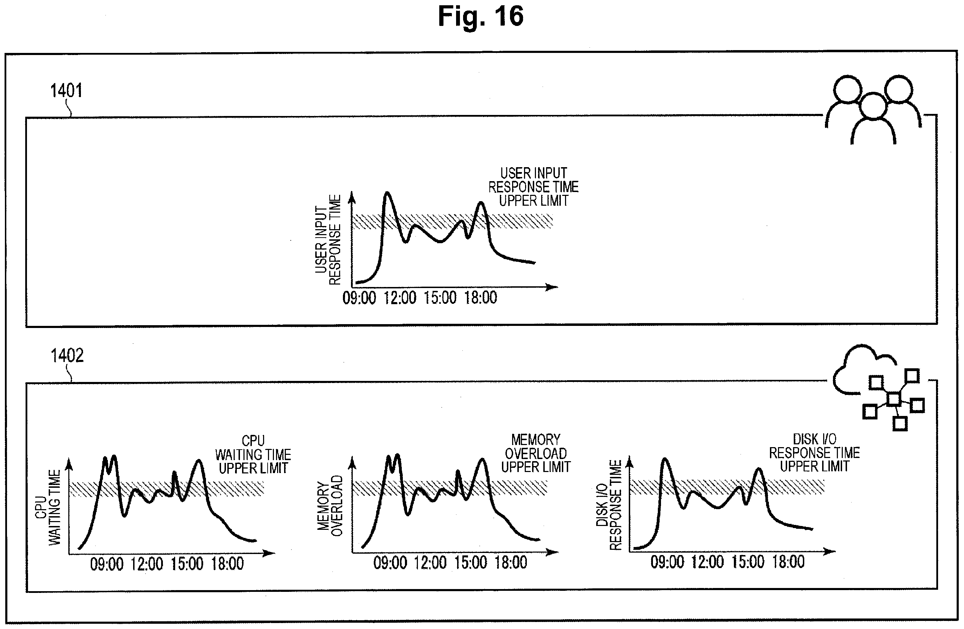

Fig. 16 is a diagram illustrating an example of a presentation screen that presents performance requirements superimposed on the performance calculated in step S104. The performance illustrated in Fig. 16 is performance calculated from the resource allocation and the workload illustrated in Figs. 14 and 15, and the performance requirements are the performance requirements illustrated in Fig. 13. An application performance presentation area 1401 is a diagram in which the upper limit of the user response time is superimposed on the user response time that is the application performance. The diagram indicated by a host performance presentation area 1402 is a diagram in which the respective upper limits input by the VDI operator 4 are superimposed on the CPU waiting time, the memory overload, and the I/O response time, which are the host performance. A user input response time in the application performance presentation area 1401 exceeds the upper limit of the user response time in a certain time zone. The CPU waiting time, memory overload, and disk I/O response time in the host performance presentation area 1402 exceed the upper limit in a certain time zone. Therefore, the example illustrated in Fig. 16 illustrates a case where the performance does not satisfy all the performance requirements.

The calculation function unit 232 determines whether or not settable resource allocations are stored in the resource allocation collection and storage unit 213 (step S106). When there is no settable resource allocation in the resource allocation collection and storage unit 213, the calculation function unit 232 transmits information indicating that there is no resource allocation that satisfies the performance requirements specified by the VDI operator 4 to the presentation function unit 233. Then, the presentation function unit 233 presents the information indicating that there is no resource allocation satisfying the specified performance requirements to the VDI operator 4.

When the settable resource allocations exist, the calculation function unit 232 reads one of the settable resource allocations from the resource allocation collection and storage unit 213 (step S107).

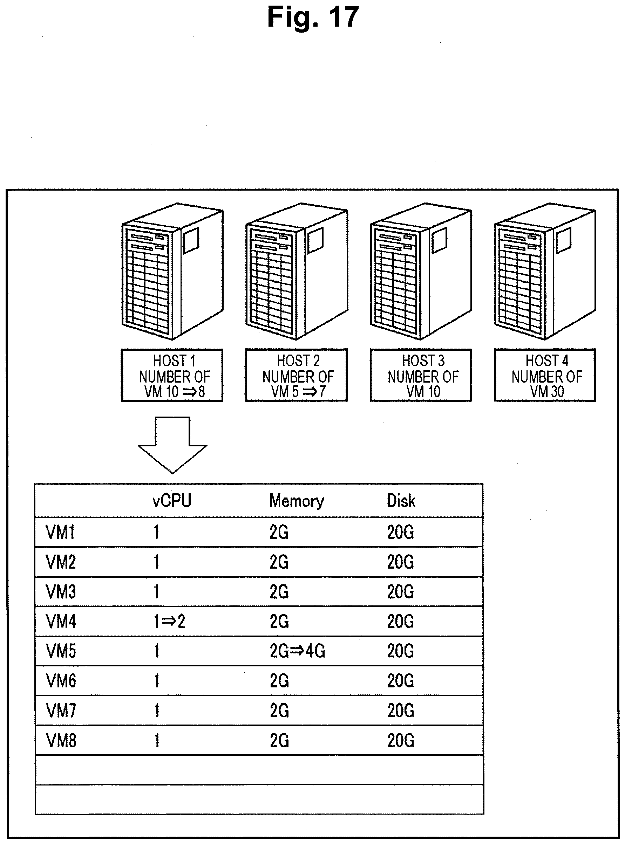

Fig. 17 is a diagram illustrating an example of settable resource allocations. Fig. 17 illustrates a change from the resource allocation illustrated in Fig. 14. Fig. 17 illustrates an example of resource allocation in which the number of virtual machines of the host 1 is reduced from 10 to 8, the number of vCPUs of the virtual machine 4 is increased from 1 to 2, and the memory amount of the virtual machine 5 is increased from 2 Giga bytes to 4 Giga bytes.

The calculation function unit 232 calculates performance by applying the performance model to the read settable resource allocation and the workload in the specified time zone calculated in step S104 (step S108).

The calculation function unit 232 determines whether the calculated performance satisfies the performance requirements (step S109). When, as a result of the decision, the performance does not satisfy the performance requirements, that is, at least one of the application performance or the host performance does not meet the performance requirements, the processing returns to step S106. When, as a result of the decision, the performance satisfies the performance requirements, that is, the application performance and the host performance all meet the performance requirements, the calculation function unit 232 sends, to the presentation function unit 233, information indicating that the read resource allocation meets the performance requirements input by the VDI operator 4. The presentation function unit 233 presents information indicating that the read resource allocation satisfies the performance requirements to the VDI operator 4. In addition, the calculation function unit 232 may directly send an instruction to the virtual infrastructure-management frame unit 120 to set the read resource allocation.

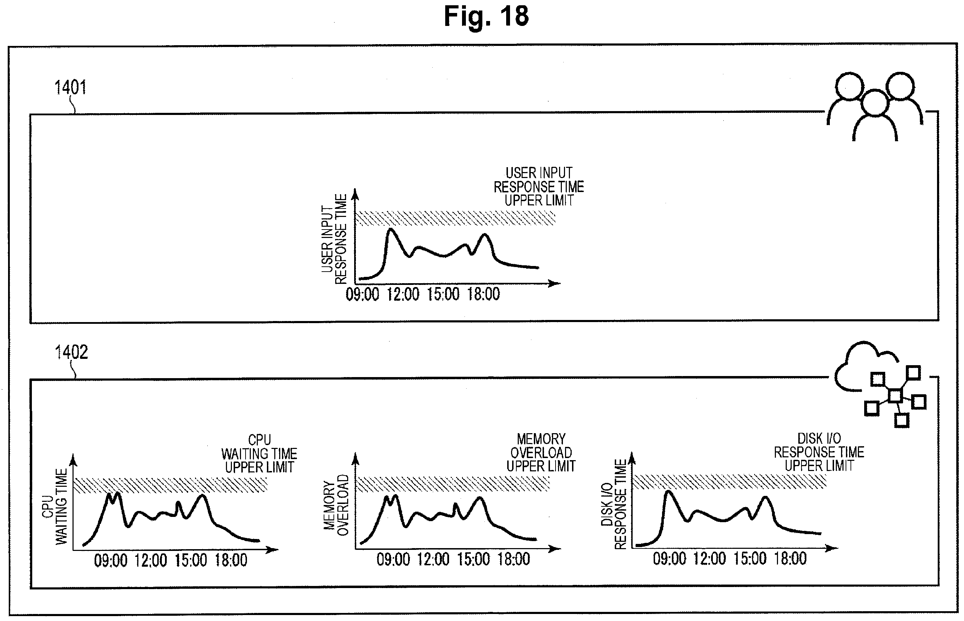

Fig. 18 is a diagram illustrating an example of a presentation screen that presents performance requirements superimposed on the performance calculated in step S108. Similarly to Fig. 16, the performance illustrated in Fig. 18 is the performance calculated from the resource allocation and the workload illustrated in Figs. 14 and 15, and the performance is the performance requirements illustrated in Fig. 13. The application performance presentation area 1401 is a diagram in which the upper limit of the user response time is superimposed on the user response time that is the application performance. The diagram indicated by the host performance presentation area 1402 is a diagram in which the respective upper limits input by the VDI operator 4 are superimposed on the CPU waiting time, the memory overload, and the I/O response time, which are the host performance. A user input response time in host performance presentation area 1402 does not exceed the upper limit of the user response time in all time zones. Furthermore, the CPU waiting time, memory overload, and disk I/O response time in the host performance presentation area 1402 do not exceed the upper limit in all time zones. Therefore, the example illustrated in Fig. 18 illustrates a case where the performance satisfies all the performance requirements.

### [Operation and Effect]

The resource allocation satisfying the application performance requirement and the host performance requirement input by the VDI operator 4 can be automatically calculated. Further, by arranging the resources of the VDI system 110 using this result, it is possible to improve the efficiency of resource use and improve the satisfaction level of the user who uses the user terminal 3.

### [Other embodiments]

Note that the present invention is not limited to the above-described embodiments. For example, although the VDI apparatus 1 and the VDI resource allocation decision apparatus 2 are illustrated as separate apparatuses, the VDI apparatus 1 and the VDI resource allocation decision apparatus 2 may be one apparatus in which all functions are integrated.

Further, the method described in the above embodiment can be stored in a storage medium such as a magnetic disk (floppy (registered trademark) disk, hard disk, and the like), an optical disk (CD-ROM, DVD, MO, or the like), or a semiconductor memory (ROM, RAM, flash memory, and the like) as a program (software means) that can be executed by a computer, and can also be distributed by being transmitted through a communication medium. Note that the programs stored on the medium side also include a setting program for configuring, in the computing machine, a software means (not only an execution program but also tables and data structures are included) to be executed by the computing machine. A computer that implements the present apparatus reads a program stored in a storage medium, constructs a software means by a setting program as the case may be, and executes the above-described processing by the operation being controlled by the software means. Note that the storage medium described in the present specification is not limited to a storage medium for distribution, and includes a storage medium such as a magnetic disk or a semiconductor memory provided in a apparatus connected inside a computer or via a network.

In short, the present invention is not limited to the above-described embodiments, and various modifications can be made in the implementation stage without departing from the gist thereof. In addition, the embodiments may be implemented in appropriate combination if possible, and in this case, combined effects can be obtained. Furthermore, the above-described embodiments include inventions at various stages, and various inventions can be extracted by appropriate combinations of a plurality of disclosed components.

### Reference Signs List

- 1: VDI apparatus
- 2: VDI resource allocation decision apparatus
- 3: User terminal
- 4: VDI operator
- 11: Processor
- 12: Program memory
- 13: Data memory
- 14: Communication interface
- 15: Input/output interface
- 17: Input unit
- 18: Display unit
- 21: Processor
- 22: Program memory
- 23: Data memory
- 24: Communication interface
- 25: Input/output interface
- 26: Bus
- 27: Input unit
- 28: Display unit
- 31: Communication interface
- 32: Input/output interface
- 33: Input unit
- 34: Display unit
- 110: VDI system
- 111: Host
- 112: Virtual machine
- 113: Operating system
- 120: Virtual infrastructure-management frame unit
- 210: Collection function unit group
- 211: Workload collection and storage unit
- 212: Performance collection and storage unit
- 213: Resource allocation collection and storage unit
- 220: Model generation function unit group
- 221: Workload prediction model generation unit
- 222: Workload prediction model storage unit
- 223: Performance model generation unit
- 224: Performance model storage unit
- 230: Calculation function unit group
- 231: Input function unit
- 232: Calculation function unit
- 233: Presentation function unit
- 1401: Application performance presentation area
- 1402: Host performance presentation area

## Claims

1. A virtual desktop (VDI) resource allocation decision apparatus that decides resource allocation of a VDI apparatus, the VDI resource allocation decision apparatus comprising:
an input unit that receives a performance requirement defining performance to be satisfied by the VDI apparatus and a specified time zone indicating a time zone in which the performance requirement is satisfied;
a resource allocation collection and storage unit that stores a current resource allocation including a number of virtual machines included in a host of the VDI apparatus and a virtual calculation resource allocated to a virtual machine;
a workload collection and storage unit that stores a workload of the VDI apparatus; and
a calculation function unit that applies the specified time zone and the workload to a workload prediction model to calculate a workload in the specified time zone, applies the workload and the current resource allocation in the specified time zone to a performance model to calculate first performance of the VDI apparatus, and determines whether or not the first performance meets the performance requirement.

2. The VDI resource allocation decision apparatus according to claim 1, wherein
the resource allocation collection and storage unit further stores settable resource allocations, and
the calculation function unit selects one of the settable resource allocations when the first performance calculated with the current resource allocation does not meet the performance requirement, applies a workload in the specified time zone and the selected settable resource allocation to the performance model to calculate second performance of the VDI apparatus, and determines whether or not the second performance meets the performance requirement.

3. The VDI resource allocation decision apparatus according to claim 2, wherein the workload prediction model is a model that outputs a workload in a specified time zone when the specified time zone is input, and the performance model is a model that outputs performance in the specified time zone when a workload in the specified time zone and resource allocation are input.

4. The VDI resource allocation decision apparatus according to claim 2 or 3, wherein the first performance and the second performance each comprise application performance experienced by a user using the VDI apparatus and host performance observable and evaluable by the host.

5. The VDI resource allocation decision apparatus according to any one of claims 1 to 4, further comprising a presentation unit that presents, when the first performance satisfies the performance requirement, resource allocation used to calculate the first performance to a VDI operator.

6. The VDI resource allocation decision apparatus according to any one of claims 1 to 5, wherein the workload includes an application workload occurring on the virtual machine and an operating system of the virtual machine, and a host workload occurring at the host, and the VDI resource allocation decision apparatus further comprises a function of alternatively collecting the host workload to generate a model when the application workload is difficult to collect or collectable in a limited manner.

7. A virtual desktop (VDI) allocation decision method performed by a VDI resource allocation decision apparatus that decides resource allocation of a VDI apparatus, the VDI resource allocation decision method comprising:
receiving a performance requirement defining performance to be satisfied by the VDI apparatus and a specified time zone indicating a time zone in which the performance requirement is satisfied;
storing a current resource allocation including a number of virtual machines included in a host of the VDI apparatus and a virtual calculation resource allocated to a virtual machine;
storing a workload of the VDI apparatus; and
applying the specified time zone to a workload prediction model to calculate a workload in the specified time zone, applies the workload in the specified time zone and the current resource allocation to a performance model to calculate performance of the VDI apparatus, and determines whether or not the performance meets the performance requirement.

8. A notification control program causing a processor to function as each of the units of the VDI resource allocation decision apparatus according to any one of claims 1 to 6.
